# EUROPEAN PATENT SPECIFICATION

(11) **EP 2 420 957 B1**
(45) Date of publication and mention of the grant of the patent: **14.01.2015**
(21) Application number: 11177305.7
(22) Date of filing: 11.08.2011
(51) Int. Cl.: G06K 19/077, G06K 19/02, H01Q 1/22, H01Q 1/40, H01Q 23/00

(54) **Conductive rubber antenna for RFID tag used in tires**
Antenne aus leitendem Gummi für RFID-Etiketten in Reifen
Antenne en cautchouc conducteur pour étiquette RFID utilisée dans un pneu

(30) Priority: 04.01.2011 US 930334; 18.08.2010 US 806726
(43) Date of publication of application: 22.02.2012
(73) Proprietor: Cooper Tire & Rubber Company, Findlay, OH 45840 (US)
(72) Inventor: Tucker, Randall L., Findlay, NY New York 45840 (US)
(74) Representative: Rüger, Barthelt & Abel

(56) References cited:
- EP-A2- 2 314 467
- WO-A1-2011/099958
- WO-A1-2011/100043

## Description

### BACKGROUND OF THE INVENTION

The use of radio frequency identification devices (RFID) in tires is gaining in popularity. See for example my issued US Patent No. 7,504,947. Other devices, including RFID devices, which may be rated on a surface of or within the structure of a tire for monitoring various functions relative to the tire include the following US patents: 5,562,787; 5,741,966; 6,062,072; 6,856,245; 6,897,770; 7,009,576; and 7,186,308.

US Patent No. 7,009,576 discloses a tire having a radio frequency antenna embedded therein. Since the rubber in which the radio frequency antenna is embedded is in a mixture of rubber and the conductive dielectric material carbon black, the patent discloses the use of an insulating layer, which is attached to the antenna by an adhesive coating, to insulate the antenna from the conductive dielectric rubber. Although US Patent 7,009,576 does not specifically identify the material from which the antenna is manufactured, typically, the antenna will be a conductive metal wire or a thin sheet of metal foil such as copper as disclosed in US Patent No. 5,562,787 or 6,147,659.

RFID devices for use in tires continues to be a goal in order to provide improved quality and traceability. However, the tire industry has been slow to adopt the RFID devices with their copper antennas. The installation foreign material in a tire is a concern. The ability to provide RFID devices in a tire with minimal component size is an important goal.

EP 2 314 467 A2, which is an intermediate document published between the priority date and the filing date of present application, discloses a host article, such as a tire, having an RFID electronic tag incorporated therein, wherein the RFIDtag comprises an IC device for storing article-specific data and positioned in line with a pair of arms of an antenna coupled to the IC device for transmitting stored data to a remote device, wherein an article portion is composed at least partially of a material composition including rubber with the IC device and the antenna attached thereto, and wherein the antenna arms are composed of a flexible conductive rubber material and are connected to the IC device at respective arrays of contact, wherein the contacts of the IC device are encased within the inward ends of the antenna arms.

### SUMMARY OF THE PRESENT INVENTION

In a preferred embodiment of present invention, as claimed in independent claim 1, an RFID device comprises: a first sheet of non-conductive material having an outwardly facing peripheral edge; an antenna member having a first antenna unit of conductive rubber engaged to said first sheet and a second antenna unit of conductive rubber engaged to said first sheet in spaced relationship with said first antenna member, the space between said first antenna unit and said second antenna unit defining a slot, said first antenna unit having a first edge, a second edge opposite to and spaced from the first edge in a width direction of the antenna member, and an end edge connecting the first and second edges with each other, each of said edges spaced from the peripheral edge of said first sheet and said second antenna unit having an upper edge, a lower edge and an end edge, each of said edges being spaced from the peripheral edge of said first sheet; a microchip positioned in said slot and conductively engaged to said first antenna unit and to said second antenna unit; a non-conductive member encircling said antenna member and engaging the outwardly facing first, second and end edges of each said antenna unit, said non-conductive member having an internal extension positioned in said slot; and a second sheet of non-conductive material engaged to (i) said antenna and (ii) said encircling non-conductive member.

In a further embodiment of present invention, as claimed in independent claim 7, an RFID device comprises: a first sheet of non-conductive material having an outwardly facing peripheral edge; an antenna of conductive rubber engaged to said first sheet and having an outwardly facing peripheral edge spaced inwardly from said first sheet peripheral edge, said antenna having a slot therein, said slot following a straight path; a microchip positioned in said slot and conductively engaged to antenna at at least two points, one of said points located on one side of said slot and the other of said points located on the other side of said slot; a non-conductive member encircling said antenna and engaging said outwardly facing peripheral edge of said antenna, said non-conductive member having an internal extension positioned in said slot; and a second sheet of non-conductive material engaged to (i) said antenna and (ii) said encircling non-conductive member.

A method for forming an RFID device of present invention may comprise the steps of: (a) providing one or two sheets of electrically conductive rubber, said sheet or each of said two sheets having a peripheral edge; (b) providing a slot in said conductive sheet or between said two sheets; (c) encircling said peripheral edge with non-conductive material; (d) positioning a microchip in said slot; (e) electronically connecting said microchip to said conductive sheet on opposite side of said slot; and (f) fastening non-conductive material to opposite sides of said conductive sheet and to said encircling non-conductive material.

Further, a method for forming an RFID device of present invention may comprise the steps of: providing a pair of electrically conductive rubber sheet units each having a first edge, a second edge opposite to and spaced from the first edge in a width direction of the rubber sheet unit, and an end edge connecting the first and second edges with each other; positioning said electrically conductive rubber sheet units in side-by-side spaced-apart relationship defining a slot therebetween; encircling said first edges; second edges and end edges with non-conductive material; positioning a microchip in said slot; electronically connecting said microchip to each of said pair of electrically conductive sheet units; and fastening non-conductive material to opposite sides of said pair of electrically conductive sheet units and to said encircling non-conductive material.

Still further, a method for forming an RFID device of present invention may comprise the steps of: providing an antenna of electrically conductive rubber having first and second sheet units; each of said units having a first edge and a second edge opposite to and spaced from the first edge in a width direction of the unit, and having a thickness in the range of 0.05 mm to 3 mm; positioning said sheet units in spaced apart relationship, the space between said units defining a slot extending between said first edges and said second edges; encircling said sheet units with non-conductive material having the same thickness as said units; positioning a microchip in said slot; electrically connecting said microchip to each of said units on opposite sides of said slot; and fastening non-conductive material having a thickness in the range of 0.05 mm to 3mm to opposite sides of said antenna and to said encircling non-conductive material.

The RFID device of the present invention utilizes a wireless antenna of conductive rubber along with a computer chip and is embedded in the body of a tire or affixed to the inner surface of the tire. The antenna is formed of electrically conductive green rubber encapsulated in insulation formed by a pair of non-conducting green rubber sheets adhered together. The insulation preferably is a non-conducting green rubber but could be non-conducting rubber or other materials having properties suitable for integration within the rubber tire. Other materials which may be utilized for the insulation include an elastomer or rubber minus the carbon black which is the conductive component. The insulation isolates the antenna from the dielectric rubber of the tire and, thereby, prevents the conductive rubber from dissipating the energy being conducted by the antenna.

The RFID device of the present invention utilizes a standard computer chip, preferably an EPC1 GEN2 RFID chip of less than one millimeter (1 mm) x one millimeter in size. The RFID chip is coupled with a conductive rubber dipole or slot antenna. Under one embodiment, conductive adhesives and/or other encapsulates maybe utilized to improve the interface between the chip mounting and the rubber antenna thus improving the performance. In this case, cured or vulcanized rubber rather than green rubber could be used for the antenna. If green rubber is used for the antenna, it is not necessary to use adhesive as the natural stickiness of the green rubber will cause it to adhere to the surface of the insulating layer engaged thereto. On the other hand, it is possible to use adhesive with an antenna of green rubber in order to provide a more effective seal. The subassembly of the rubber antenna and the computer chip is enclosed in a non-conductive rubber envelope or sheets. The current technology allows for the rubber antenna to be an integral component of the tire with no concerns of destroying the integrity of the tire.

Preferably the RFID device of the present invention is produced in the uncured state. It is affixed to the inner or outer surface of the tire in the green state. It may also be embedded in the tires, between the plies. Following such affixing or embedding, it is vulcanized along with the rest of the tire. However, it could also be vulcanized and then affixed following vulcanization of the tire or assembled using vulcanized conductive rubber and then affixed to the tire. The installed RFID devices will allow improved quality, sorting of tires on conveyors and tracking of shipments.

The prior art RFID devices for tires utilize a wire wound antenna. The wire wound antenna comes into direct contact with the rubber. The carbon black used in the tire rubber causes the rubber to be somewhat conductive. Unless properly insulated, the conductive characteristics of the tire rubber will de-tune the antenna of the RFID device which greatly reduces its effective range.

The antenna of the RFID device of the present invention has a conductive rubber compound which has been developed for its conductivity to get into the range of 20 ohms to 400 ohms per inch of rubber. Resistances in the range of 40-100 ohms per inch are suitable for use as an antenna. The non-conductive rubber is utilized as an electrical insulator which isolates the antenna from the rubber of the tire. The encapsulation in the non-conductive rubber causes the antenna to stay in tune with the RFID microchip, which allows for the long range read characteristics.

### IN THE DRAWINGS

Fig. 1 is a sectional view of a tire showing an RFID device with the antenna of the present invention encapsulated therein or affixed to the interior sidewall.
Fig. 2 is a plan view showing one form of RFID device with a microchip and antenna encapsulated in and between layers of insulation material.
Fig. 3 is a sectional view along line 3-3 of Fig. 2.
Fig. 4 is an exploded perspective view of the RFID device of the present invention utilizing the wireless antenna of the present invention.
Fig. 5 is a view similar to Fig. 2 showing a different embodiment.
Fig. 6 is a view similar to Fig. 3 of the embodiment of Fig. 5.
Fig. 7 is an exploded perspective view of the embodiment of Fig. 5.

### DETAILED DESCRIPTION OF THE INVENTION

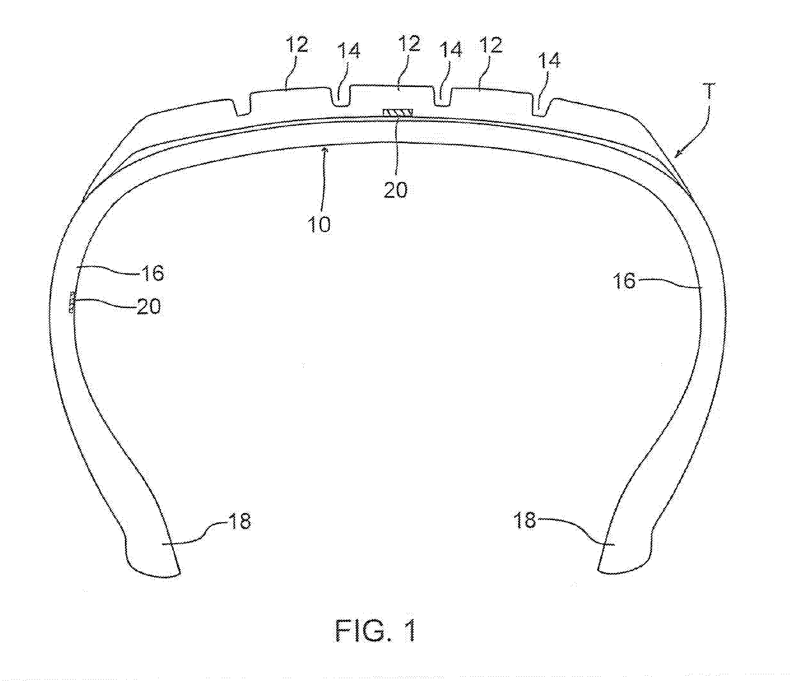

Referring to Fig. 1 there is shown a tire T having a crown 10 with external treads 12 and grooves 14. In cross-section the tire T has the crown 10 extending radially outwardly along an arcuate path to a pair of oppositely disposed sidewalls 16 which define the maximum radial extent of the tire T. The sidewalls 16 curve inwardly from such maximum radial extent to a narrower area terminating at a pair of oppositely disposed beads 18. As shown in Fig. 1 there is provided an RFID device 20 of the present invention which is permanently embedded either in the crown 10 or in one of the sidewalls 16. It may also be adhered to the inner surface of the tire in the area of the crown 10 or the sidewall 16.

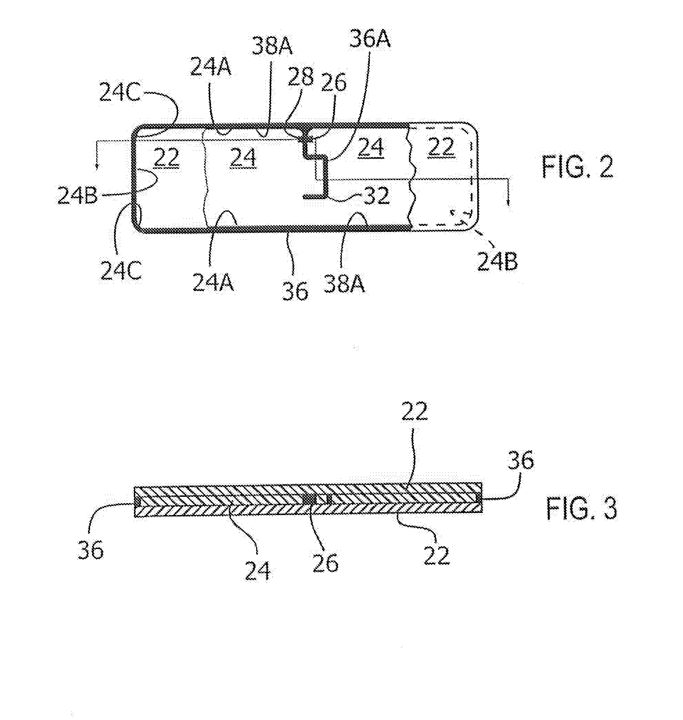

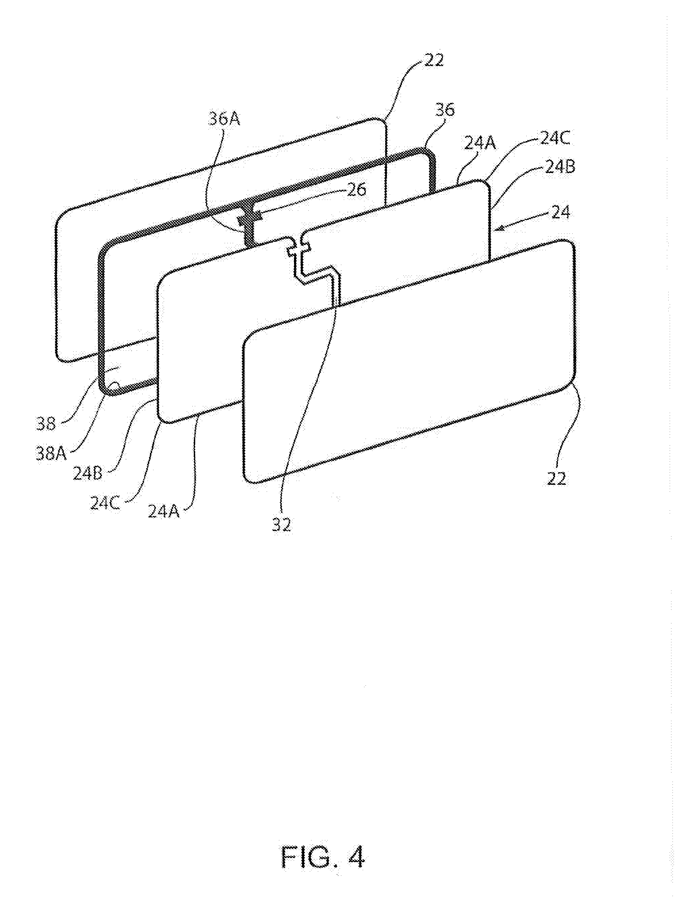

Referring to Figs. 2, 3 and 4, the RFID device includes a pair of insulation members 22 and an antenna 24 encapsulated therebetween. A RFID microchip 26 such as EPC1 GEN has tabs 28 attached to the antenna 24. The antenna 24, which may be one of a number of shapes, is shown as a rectangle having a length defined by long upper and lower (as viewed in Figs. 2 and 4) edges 24A, short side edges 24B and curved or arcuate corners 24C.

The antenna 24 has a slot 32 extending downwardly (as viewed in Figs. 2 and 4) from the upper edge 24A which follows a path which provides suitable tuning characteristics for the specific RFID microchip 26 utilized.

The slot 32 as shown in Fig. 2 follows a downward path toward the lower edge 24A followed by one curving into a perpendicular segment extending toward the side edge 24B on the right followed by another segment extending toward the lower edge 24A and finally one extending toward the side edge 24B on the left. The slot 32 could also have segments disposed at acute angles to the edges 24A and 24B as well as curved segments depending on the shape most suitable for tuning for the specific RFID microchip utilized. Depending upon the characteristics of the microchip, it could also be straight and could extend completely between the upper edge 24A and the lower edge 24A thereby resulting in the antenna 24 being two pieces separated by the slot 32.

As may be seen most clearly in Figs. 2 and 4, a stamped or otherwise shaped central insulation member 36 formed of non-conductive green rubber is also positioned between the two insulation members 22. The stamped insulation member 36 has an enlarged opening 38 sized to snugly receive therein the antenna 24. Thus, the internal edge 38A of the opening 38 is substantially the same size as the peripheral edge of the antenna 24 as represented by the numerals 24A, 24B, and 24C. With this construction, the antenna 24, including its edges is completely encapsulated in non-conducting insulation members 22, 36 and 22.

The stamped insulation member 36 has an internal extension 36A sized and shaped to fit in the slot 32. The internal extension 36A substantially fills the slot 32. If the slot 32 was not filled with the insulation of the internal extension 36A, the green rubber of the antenna 24 would flow into the slot 32 during vulcanization of the tire or during vacanization of the RFID device 20 if done prior to its assembly in the tire T.

As previously discussed, the length and shape of the slot 32 are designed to tune the antenna to be at substantially the same frequency of the RFID microchip 26.

In preparation for assembly of the insulation members 22, the antenna 24 and the stamped insulation member 36, the RFID microchip 26 may be mounted on either the stamped insulation member 36 (as shown in Fig. 4) or on the antenna 24. In either event, the tabs 28 of the microchip must be engaged to the antenna 24 on opposite sides of the slot 32 when the components are assembled to form the RFID device 20. The location of the chip may be adjusted to improve performance of the RFID device 20.

The insulation members 22 may be formed of any of a number of non-conductive or low conductive materials such as those specified above and having a dielectric constant of about 4 or less. The insulation members 22 have a thickness in the range of 0.05 mm to 3 mm, where mm is millimeters. The thickness of the antenna 24 and the central insulation member 36 are also in the range of 0.05 mm to 3 mm. Although the central insulation member 36 and the antenna 24 should be the same thickness, it is not necessary that they be the same thickness as the other insulation members 22, 22. They could be thinner or thicker than such other insulation members 22, 22. Additionally, it is possible that one on the outer insulation members 22 be thicker than the other outer insulation member 22.

The amount of carbon black and/or other ingredients providing conductivity to the antenna 24 is such as to give it a resistance in the range of 20 ohms to 400 ohms and preferably in the range of 40 ohms to 100 ohms.

As can be seen in Fig. 3, the opposing insulation members 22, 22 are sealed to the central insulation member 36 completely around the periphery to thereby encapsulate the antenna 24 and the RFID chip 26. As previously discussed, the internal edge 38A of the enlarged opening 38 seals the edges 24A, 24B and 24C of the antenna 24. Preferably, the insulation members 22, 22 and 36 are formed non-conductive green (non-vulcanized) rubber. When manufactured of green rubber, the edges of the opposed insulation members 22 will adhere to the central insulation member 36 without the necessity of providing any adhesive therebetween. The insulation members 22, 36, 22 will also adhere to the antenna 24 without the use of adhesive provided all of such members are green rubber. When green rubber is used for the insulation and the antenna 24, the insulation members 22, 22 and the central insulation member 36 can be sealed together and to the antenna 24 simply by pressing together. If the insulation members 22 and/or central insulation member 36 and/or antenna 24 are formed of a material other than green rubber, they can be heat sealed or adhesively joined together.

The completed assembly of the insulation members 22, 22 central insulation member 36, antenna 24 and RFID microchip 26 forming the RFID device 20 may be positioned in the tire T between the various plies thereof or on its inner surface as previously discussed. Following positioning in the tire T or in its inner surface, it will be included in the vulcanization of the tire thereby providing a completed tire and RFID device with a wireless antenna.

If desired, the RFID device of the present invention could be packaged while the insulation layers 22, 22 and 36 and the antenna 24 layer are in the green state and then shipped another manufacturing facility for installation in tires during manufacturing. Additionally, the RFID device of the present invention could itself be vulcanized prior to incorporation in a tire.

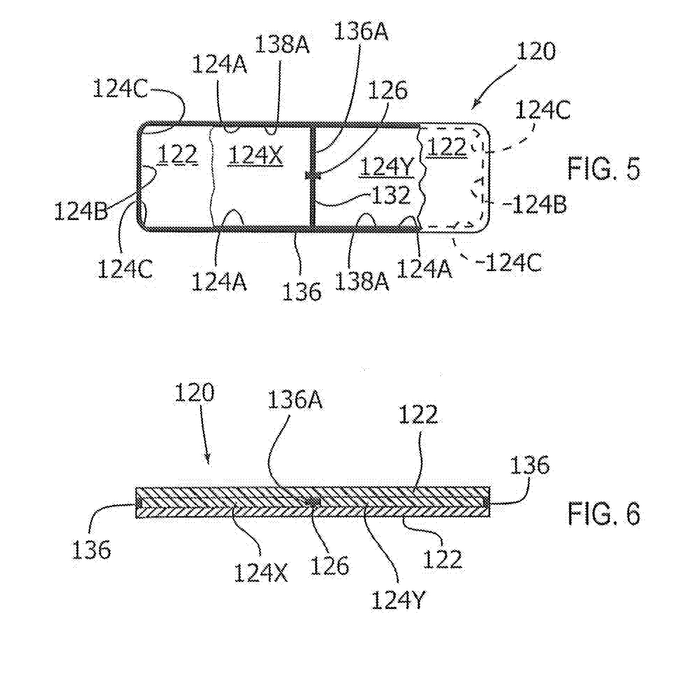

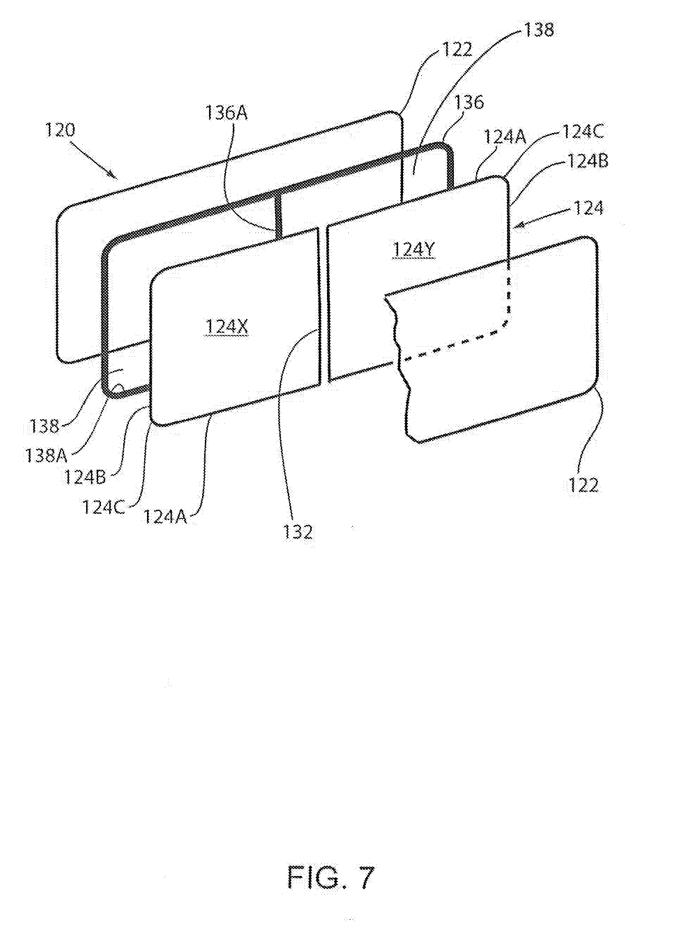

Referring to Figs. 5 - 7 there is shown a modified embodiment of RFID device incorporating a modified antenna. The modified RFID device 120 utilizes non-conductive insulation members 122 similar to the insulation members 22 of the embodiment of Figs. 1 - 4. However, under the present embodiment there is provided an antenna member 124 comprised of two separate units, 124X and 124Y. The antenna units 124X and 124Y are formed of electrically conductive green rubber when inserted in the interior plies of a being assembled tire and then vulcanized. For those RFID devices intended to be adhered to the interior surface of a completed tire, the electrically conducting rubber for the antenna would not be green rubber. Preferably the antenna units 124X and 124Y are the same size and when assembled as shown in Figs. 5 and 6 are spaced apart to provide therebetween a slot 132 which follows a straight line path separating antenna unit 124X from antenna unit 124Y. The width of the slot 132 which defines the space between such antenna unit 124X and 124Y is preferably in the range of 1.6 to 3.2 millimeters (mm).

Each of the antenna units 124X and 124Y has a pair of upper and lower edges 124A and ends 124B joined by arcuate corner edges 124C.

A central insulation member 136 has a pair of enlarged openings 138, which openings are separated by a slot filling member 136A. The central insulation member 136 is sized such that the openings 138 each snuggly receive therein one of the antenna units 124X or 124Y. When such antenna units, 124X and 124Y, are received in their respective openings 138, the insulation slot filling member 136A will be snugly received in the slot 132 separating the antenna units 124X and 124Y. As with the previous embodiment, a microchip 126 is positioned in the slot 132 and has leads on one side connected to antenna unit 124X and leads on the opposing side connected to antenna 124Y. Preferably the microchip 126 is mounted on the insulation slot filling member 136A. The position of the microchip 126 may be adjusted to be closer or further from the upper edges 124A; however, it is preferably midway between the upper and lower edges 124A.

The insulation members 122 are adhered to opposing sides of the assembled central insulation member 136, antenna unit 124X and 124Y, and the microchip 126.

Tuning of the antenna member 124 may be accomplished by varying the size of the antenna units 124X and 124Y. it is preferable that the antenna units are the same size; however, it is within the contemplation of the present invention that one of such antenna units could be larger than the other of such antenna units 124X, 124Y.

A major advantage of the embodiment of Figs. 5 - 7 is that it can be read from a much greater distance than the RFID device 20 of the embodiment of Figs. 1 - 4. Thus, the modified RFID device 120 of Figs. 5-7 can be read from a distance of 12 feet as opposed as to only a distance of 3 feet for some configurations of slots 32 shown and as described in the embodiment of Figs. 1 - 4.

The RFID device of the present invention is one which is economical to manufacture, can be readily incorporated in a tire and can be monitored from a distance as great as 12 feet and possibly greater.

Many modifications will be readily apparent to those skilled in the art. Accordingly, the scope of the present invention should be determined by the scope of the claims appended hereto.

## Claims

1. An RFID device comprising:
(a) a first sheet (122) of non-conductive material having an outwardly facing peripheral edge;
(b) an antenna member (124) having a first antenna unit (124X) of conductive rubber engaged to said first sheet (122) and a second antenna unit (124Y) of conductive rubber engaged to said first sheet (122) in spaced relationship with said first antenna unit (124X), the space between said first antenna unit (124X) and said second antenna unit (124X) defining a slot (132), said first and second antenna units (124X, 124Y) each having a first edge (124A), a second edge (124A) opposite to and spaced from the first edge (124A) in a width direction of the antenna member (124), and an end edge (124B) connecting the first and second edges (124A, 124A) with each other, each of said edges (124A, 124B) being spaced from the peripheral edge of said first sheet;
(c) a microchip (126) positioned in said slot (132) and conductively engaged to said first antenna unit (124X) and to said second antenna unit (124Y);
(d) a non-conductive member (136) encircling said antenna member (124) and engaging said outwardly facing first, second and end edges (124A, 124B) of each said antenna unit (124X, 124Y), said non-conductive member (136) having an internal extension (136A) positioned in said slot (132); and
(e) a second sheet (122) of non-conductive material engaged to (i) said antenna member (124) and (ii) said encircling non-conductive member (136).

2. The RFID device according to claim 1 wherein said slot (132) follows a straight path.

3. The RFID device according to claim 2 where said first antenna unit (124X) is substantially the same size as said second antenna unit (124Y).

4. The RFID device according to claim 2 wherein said slot (132) extends from said first edge (124A) to said second edge (124A) thereby defining said first antenna unit (124X) and said second antenna unit (124Y) spaced therefrom.

5. The RFID device according to claim 3 wherein said microchip (126) is positioned substantially midway between said first edge (124A) and said second edge (124A).

6. The RFID device according to claim 1 wherein said slot (132) follows a non-straight path.

7. An RFID device comprising:
(a) a first sheet (22) of non-conductive material having an outwardly facing peripheral edge;
(b) an antenna (24) of conductive rubber engaged to said first sheet (22) and having an outwardly facing peripheral edge (24A, 24B, 24C) spaced inwardly from said first sheet peripheral edge, said antenna having a slot (32) therein, wherein said slot follows a straight path;
(c) a microchip (26) positioned in said slot (32) and conductively engaged to said antenna (24) at at least two points (28), one of said points (28) located on one side of said slot (32) and the other of said points (28) located on the other side of said slot (32);
(d) a non-conductive member (36) encircling said antenna (24) and engaging said outwardly facing peripheral edge (24A, 24B, 24C) of said antenna (24), said non-conductive member (36) having an internal extension (36A) positioned in said slot (32); and
(e) a second sheet (22) of non-conductive material engaged to (i) said antenna (24) and (ii) said encircling non-conductive member (36).

8. The RFID device according to claim 1 or 7 wherein said antenna (24) or antenna member (124) has an electrical resistance in the range of 20 ohms to 400 ohms.

9. The RFID device according to claim 1 or 7 wherein said antenna (24) or antenna member (124) has an electrical resistance in the range of 40 ohms to 100 ohms.

10. The RFID device according to claim 1 or 7 wherein each of said antenna (24) or antenna member (124) and said encircling non-conductive member (36, 136) has a thickness in the range of 0.05 mm to 3 mm.

11. The RFID device according to claim 1 or 7 wherein said first and second sheets (22, 122) are adhered to said antenna (24) or antenna member (124) by said antenna (24) or antenna member (124) or said first and second sheets (22, 122) being green rubber.

12. A tire having implanted therein or fastened on a surface thereof the RFID device of claim 1 or 7.

## Patentansprüche

1. RFID-Vorrichtung, die aufweist:
a) ein erstes Blatt (122) aus einem nicht leitfähigen Material, das einen nach außen weisenden Umfangsrand aufweist;
b) ein Antennenelement (124), mit einer ersten Antenneneinheit (124X) aus leitfähigem Kautschuk, die mit dem ersten Blatt (122) eingriffsverbunden ist, und einer zweiten Antenneneinheit (124Y) aus leitfähigem Kautschuk, die mit dem ersten Blatt (122) eingriffsverbunden ist, in beabstandeter Beziehung zu der ersten Antenneneinheit (124X), wobei der Abstand zwischen der ersten Antenneneinheit (124X) und der zweiten Antenneneinheit (124X) einen Schlitz (132) definiert, wobei die erste und die zweite Antenneneinheit (124X, 124Y) jeweils einen ersten Rand (124A), einen zweiten Rand (124A), der in einer Weitenrichtung des Antennenelements (124) dem ersten Rand (124A) gegenüberliegt und von diesem beabstandet ist, und einen Endrand (124B) aufweist, der den ersten und den zweiten Rand (124A, 124A) miteinander verbindet, wobei jeder der Ränder (124A, 124B) von dem Umfangsrand des ersten Blattes beabstandet ist;
c) einen Mikrochip (126), der in dem Schlitz (132) positioniert ist und mit der ersten Antenneneinheit (124X) und der zweiten Antenneneinheit (124Y) leitend eingriffsverbunden ist;
d) ein nicht leitfähiges Element (136), das das Antennenelement (124) umgibt und mit dem nach außen weisenden ersten, zweiten Rand und Endrand (124A, 124B) jeder Antenneneinheit (124X, 124Y) eingriffsverbunden ist, wobei das nicht leitfähige Element (136) einen inneren Fortsatz (136A) aufweist, der in dem Schlitz (132) positioniert ist; und
e) ein zweites Blatt (122) aus einem nicht leitfähigen Material, das mit (i) dem Antennenelement (124) und (ii) dem umgebenden nicht leitfähigen Element (136) eingriffsverbunden ist.

2. RFID-Vorrichtung nach Anspruch 1, wobei der Schlitz (132) einem geraden Weg folgt.

3. RFID-Vorrichtung nach Anspruch 2, wobei die erste Antenneneinheit (124X) im Wesentlichen die gleiche Größe wie die zweite Antenneneinheit (124Y) aufweist.

4. RFID-Vorrichtung nach Anspruch 2, wobei der Schlitz (132) sich von dem ersten Rand (124A) zu dem zweiten Rand (124A) erstreckt, wodurch er die erste Einheit (124X) und die von dieser beabstandete zweite Antenneneinheit (124Y) definiert.

5. RFID-Vorrichtung nach Anspruch 3, wobei der Mikrochip (126) im Wesentlichen in der Mitte zwischen dem ersten Rand (124A) und dem zweiten Rand (124A) positioniert ist.

6. RFID-Vorrichtung nach Anspruch 1, wobei der Schlitz (132) einem nicht geraden Weg folgt.

7. RFID-Vorrichtung, die aufweist:
a) ein erstes Blatt (22) aus einem nicht leitfähigen Material, das einen nach außen weisenden Umfangsrand aufweist;
b) eine Antenne (24) aus leitfähigem Kautschuk, die mit dem ersten Blatt (22) eingriffsverbunden ist und einen nach außen weisenden Umfangsrand (24A, 24B, 24C) aufweiset, der von dem Umfangsrand des ersten Blattes nach innen beabstandet ist, wobei die Antenne einen Schlitz (32) darin aufweist, wobei der Schlitz einem geraden Weg folgt;
c) einen Mikrochip (26), der in dem Schlitz (32) positioniert und mit der Antenne (24) an wenigstens zwei Punkten (28) leitend eingriffsverbunden ist, wobei einer der Punkte (28) sich auf einer Seite des Schlitzes (32) befindet und der andere der Punkte (28) sich auf der anderen Seite des Schlitzes (32) befindet;
d) ein nicht leitfähiges Element (36), das die Antenne (24) umgibt und mit dem nach außen weisenden Umfangsrand (24A, 24B, 24C) der Antenne (24) eingriffsverbunden ist, wobei das nicht leitfähige Element (36) einen inneren Fortsatz (36A) aufweist, der in dem Schlitz (32) positioniert ist; und
e) ein zweites Blatt (22) aus nicht leitfähigem Material, das mit (i) der Antenne (24) und (ii) dem umgebenden nicht leitfähigen Element (36) eingriffsverbunden ist.

8. RFID-Vorrichtung nach Anspruch 1 oder 7, wobei die Antenne (24) oder das Antennenelement (124) einen elektrischen Widerstand in der Größenordnung von 20 Ohm bis 400 Ohm aufweist.

9. RFID-Vorrichtung nach Anspruch 1 oder 7, wobei die Antenne (24) oder das Antennenelement (124) einen elektrischen Widerstand in der Größenordnung von 40 Ohm bis 100 Ohm aufweist.

10. RFID-Vorrichtung nach Anspruch 1 oder 7, wobei jede bzw. jedes von der Antenne (24) oder dem Antennenelement (124) und dem umgebenden nicht leitfähigen Element (36, 136) eine Dicke in der Größenordnung von 0,05 mm bis 3 mm aufweist.

11. RFID-Vorrichtung nach Anspruch 1 oder 7, wobei das erste und das zweite Blatt (22, 122) an der Antenne (24) oder dem Antennenelement (124) anhaften, indem die Antenne (24) oder das Antennenelement (124) oder das erste und das zweite Blatt (22, 122) aus grünem Kautschuk bestehen.

12. Reifen mit der in ihm eingebetteten oder auf einer oberfläche von ihm befestigten RFID-Vorrichtung nach Anspruch 1 oder 7.

## Revendications

1. Dispositif RFID, comportant :
(a) une première feuille (122) en matériau non conducteur ayant un bord périphérique orienté vers l'extérieur ;
(b) un élément formant antenne (124) ayant une première partie (124X) d'antenne en caoutchouc conducteur au contact de ladite première feuille (122) et une seconde partie (124Y) d'antenne en caoutchouc conducteur au contact de ladite première feuille (122) et espacée par rapport à ladite première partie (124X) d'antenne, l'espace entre ladite première partie (124X) d'antenne et ladite seconde partie (124Y) d'antenne définissant une fente (132), lesdites première et seconde parties (124X, 124Y) d'antenne ayant chacune un premier bord (124A), un deuxième bord (124A) opposé et espacé par rapport au premier bord (124A) dans un sens de largeur de l'élément formant antenne (124), et un bord terminal (124B) reliant l'un à l'autre les premier et deuxième bords (124A, 124A), chacun desdits bords (124A, 124B) étant espacé par rapport au bord périphérique de ladite première feuille ;
(c) une micro-puce RFID (126) placée dans ladite fente (132) et au contact, d'une manière conductrice, de ladite première partie (124X) d'antenne et de ladite seconde partie (124Y) d'antenne ;
(d) un élément non conducteur (136) entourant ledit élément formant antenne (124) et au contact desdits premier bord, deuxième bord et bord terminal (124A, 124B), orientés vers l'extérieur, de chaque dite partie (124X, 124Y) d'antenne, ledit élément non conducteur (136) ayant un prolongement interne (136A) placé dans ladite fente (132) ; et
(e) une seconde feuille (122) en matériau non conducteur au contact (i) dudit élément formant antenne (124) et (ii) dudit élément non conducteur (136) entourant ledit élément formant antenne.

2. Dispositif RFID selon la revendication 1, dans lequel ladite fente (132) suit une trajet rectiligne.

3. Dispositif RFID selon la revendication 2, dans lequel ladite première partie (124X) d'antenne a sensiblement les mêmes dimensions que ladite seconde partie (124Y) d'antenne.

4. Dispositif RFID selon la revendication 2, dans lequel ladite fente (132) s'étend dudit premier bord (124A) audit deuxième bord (124A) en définissant de la sorte ladite première partie (124X) d'antenne et ladite seconde partie (124Y) d'antenne espacée par rapport à celle-ci.

5. Dispositif RFID selon la revendication 3, dans lequel ladite micro-puce (126) est placée sensiblement à mi-distance entre ledit premier bord (124A) et ledit deuxième bord (124A).

6. Dispositif RFID selon la revendication 1, dans lequel ladite fente (132) suit un trajet non rectiligne.

7. Dispositif RFID, comportant :
(a) une première feuille (22) en matériau non conducteur ayant un bord périphérique orienté vers l'extérieur ;
(b) une antenne (24) en caoutchouc conducteur au contact de ladite première feuille (22) et ayant un bord périphérique (24A, 24B, 24C) orienté vers l'extérieur et espacé vers l'intérieur par rapport audit bord périphérique de la première feuille, ladite antenne ayant une fente (32) dans celle-ci, ladite fente suivant un trajet rectiligne ;
(c) une micro-puce (26) placée dans ladite fente (32) et au contact, d'une manière conductrice, de ladite antenne (24) en au moins deux points (28), l'un desdits points (28) étant situé d'un côté de ladite fente (32) et l'autre desdits points (28) étant situé de l'autre côté de ladite fente (32) ;
(d) un élément non conducteur (36) entourant ladite antenne (24) et au contact dudit bord périphérique (24A, 24B, 24C) de ladite antenne (24) orienté vers l'extérieur, ledit élément non conducteur (36) ayant un prolongement interne (36A) placé dans ladite fente (32) ; et
(e) une seconde feuille (22) en matériau non conducteur au contact (i) de ladite antenne (24) et (ii) dudit élément non conducteur (36) entourant ladite antenne.

8. Dispositif RFID selon la revendication 1 ou 7, dans lequel ladite antenne (24) ou ledit élément formant antenne (124) a une résistance électrique d'une valeur de 20 ohms à 400 ohms.

9. Dispositif RFID selon la revendication 1 ou 7, dans lequel ladite antenne (24) ou ledit élément formant antenne (124) a une résistance électrique d'une valeur de 40 ohms à 100 ohms.

10. Dispositif RFID selon la revendication 1 ou 7, dans lequel ladite antenne (24) ou ledit élément formant antenne (124) et ledit élément non conducteur (36, 136) qui l'entoure ont chacun une épaisseur de 0,05 à 3 mm.

11. Dispositif RFID selon la revendication 1 ou 7, dans lequel lesdites première et seconde feuilles (22, 122) adhèrent à ladite antenne (24) ou audit élément formant antenne (124) grâce au fait que ladite antenne (24) ou ledit élément formant antenne (124) ou lesdites première et seconde feuilles (22, 122) sont en caoutchouc cru.

12. Pneumatique dans lequel est implanté ou à la surface duquel est fixé le dispositif RFID selon la revendication 1 ou 7.
